# EUROPEAN PATENT APPLICATION

(11) **EP 2 568 564 A1**
(43) Date of publication of application: **13.03.2013**
(21) Application number: 11192072.4
(22) Date of filing: 06.12.2011
(51) Int. Cl.: H02J 7/00

(54) **Battery charge/discharge management system and method.**

(30) Priority: 08.09.2011 TW 100132361
(71) Applicant: Askey Technology (Jiangsu) Ltd., Economic-Technological Development Area Wujiang Jiangsu (CN); Askey Computer Corp., New Taipei City 235 (TW)
(72) Inventor: Lin, Lantion, 234 New Taipei City (TW); Hsieh, Ching-Feng, 108 Taipei City (TW)
(74) Representative: Bonvicini, Davide

(57) **Abstract**

A battery charge/discharge management system and method charge a battery according to an operation state of the battery. The system includes a reading module that reads a parameter of the battery; an analysis module that analyzes the parameter of the battery and determines the operation state of the battery according to the parameter of the battery so as to obtain a discharge parameter and record a discharge curve at that time; and a charging module having a mapping table that maps a plurality of discharge curve models and a plurality of charge modes, the charging module obtaining a discharge curve model according to the discharge curve and charging the battery based on a charge mode to which the mapping table maps the discharge curve model. As such, the battery is prevented from staying under high temperature and protected from being damaged by over charging/discharging.

## Description

### BACKGROUND OF THE INVENTION

### 1. Field of the Invention

The present invention relates to battery charge/discharge management systems and methods, and, more particularly, to a battery charge/discharge management system and a method that charges a battery according to a discharge state of the battery.

### 2. Description of Related Art

Along with the rapid development of computer science and technologies, portable electronic devices are becoming more and more popular. The portable electronic devices, such as tablet personal computers, PDAs and smart phones, are compact-sized and portable, and expected to be used outdoors for long time.

When a portable electronic device is used outdoors, it becomes especially important to manage the battery of the device, especially when the battery is the only power source of the device. Conventionally, the battery is charged/discharged through a fixed mode without taking into account surrounding factors. For example, the temperature and charge/discharge frequency of the battery have a great impact on the lifespan and life of the battery. The battery may be easily damaged by over charging, continuous high temperature during a charging process or unnecessary charging.

Therefore, it is imperative to provide a battery charge/discharge management system and method wherein a battery is charged only when needed and a suitable charging mechanism is provided by taking into account internal factors of the battery such as the temperature and voltage of the battery, thereby reducing possible damages to the battery during a charging/discharging process.

### SUMMARY OF THE INVENTION

In view of the above-described drawbacks, an object of the present invention is to provide a battery charge/discharge management system and method, which provide a suitable charge mode according to the operation state of a battery, thereby avoiding unsuitable charging/discharging which may otherwise damage the battery.

Another object of the present invention is to monitor the operation state of the battery so as to send a warning signal or stop charging/discharging the battery if the temperature, voltage or current of the battery is abnormal.

In order to achieve the above and other objects, the present invention provides a battery charge/discharge management system that charges a battery according to an operation state of the battery, the system comprising: a reading module for reading a parameter of the battery; an analysis module for analyzing the parameter of the battery and determining the operation state of the battery according to the parameter of the battery so as to obtain a discharge parameter and record a discharge curve at that time; and a charging module having a mapping table that maps a plurality of discharge curve models and a plurality of charge modes, the charging module obtaining a discharge curve model according to the discharge curve recorded by the analysis module and charging the battery based on a charge mode to which the mapping table maps the discharge curve model.

In an embodiment, the charge modes provide different charging current and time based on different discharging current and voltage of the battery.

In an embodiment, a threshold value is set in the analysis module so as for the analysis module to record the discharge curve at the time the discharge parameter is greater than the threshold value.

In an embodiment, the discharge parameter is an average value of the current value of the parameter of the battery and another value of the parameter of the battery obtained before a certain time.

The present invention further provides a battery charge/discharge management method for charging a battery according to an operation state of the battery, the method comprising the steps of: (1) reading a parameter of the battery; (2) analyzing the parameter of the battery to obtain the operation state of the battery and a discharge parameter; (3) determining the discharge parameter and recording a discharge curve at that time; and (4) providing a mapping table that maps a plurality of discharge curve models and a plurality of charge modes and obtaining a discharge curve model according to the discharge curve so as to provide a charge mode corresponding to the discharge curve model according to the mapping table.

In an embodiment, step (3) further comprises providing a threshold value, and recording the discharge curve when the discharge parameter is determined to be greater than the threshold value. Further, step (3) comprises going back to step (1) to continuously read the parameter of the battery when the discharge parameter is determined to be less than the threshold value.

In another embodiment, step (3) comprises keeping the discharge curve unchanged when the discharge parameter is determined to be less than the threshold value, and step (4) comprises providing the charge mode corresponding to the discharge curve.

In an embodiment, the charge modes of step (4) provide different charging current and time based on different discharging current and voltage of the battery.

Therefore, the battery charge/discharge management system and method of the present invention provide a charging mechanism according to the operation state of a battery. In particular, the parameter of the battery is continuously read so as to obtain the operation state of the battery, and further, different charging current and time can be provided based on different discharging current and voltage of the battery. As such, the battery is charged only when needed so as to reduce the number of charging times. Furthermore, the charging current and time can be controlled to thereby prevent the battery from reaching a too high temperature which may otherwise damages the battery.

In addition, the present invention provides a protection mechanism for the battery, which determines whether the battery is abnormal by monitoring the parameter of the battery such as the temperature, voltage or current of the battery, and sends a warning signal or stops charging/discharging the battery if necessary, thereby prolonging the life and lifespan of the battery.

### BRIEF DESCRIPTION OF DRAWINGS

FIG 1 is a block diagram of a battery charge/discharge management system according to an embodiment of the present invention;
FIG 2 is a block diagram of a battery charge/discharge management system according to another embodiment of the present invention;
FIG 3 is a flow chart of a battery charge/discharge management method according to the present invention; and
FIG 4 shows an example of a discharge curve of a battery charge/discharge management system according to the present invention.

### DETAILED DESCRIPTION OF PREFERRED EMBODIMENTS

The following illustrative embodiments are provided to illustrate the disclosure of the present invention, these and other advantages and effects can be apparent to those in the art after reading this specification.

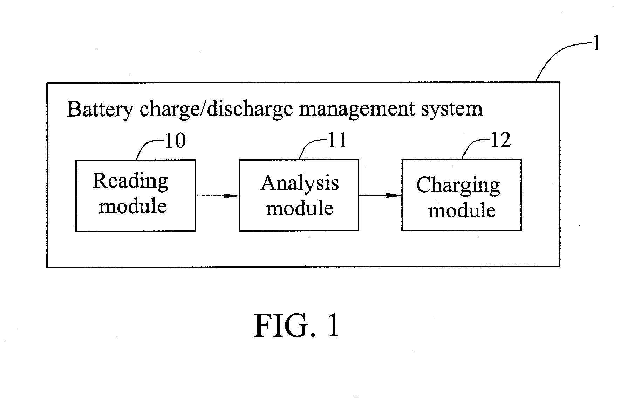

FIG 1 is a block diagram of a battery charge/discharge management system 1 according to an embodiment of the present invention. The battery charge/discharge management system 1 provides a charging mechanism according to the operation state of a battery. Compared with the conventional fixed charge mode, the system 1 provides a suitable charge mode for a battery by monitoring parameters of the battery. The battery charge/discharge management system 1 has a reading module 10, an analysis module 11 and a charging module 12.

The reading module 10 is used to read a parameter of the battery. In particular, when the system 1 is started, the reading module 10 continuously reads the parameter of the battery so as to obtain the operation state of the battery. The parameter of the battery comprises at least one selected from the group consisting of the voltage, current, temperature and capacity of the battery.

The analysis module 11 is used to analyze the parameter of the battery and determine the operation state of the battery according to the parameter of the battery so as to obtain a discharge parameter and record a discharge curve at that time. For example, the analysis module 11 records the discharge curve at the time the discharge parameter is greater than a threshold value. In particular, the analysis module 11 analyzes the parameter of the battery obtained by the reading module 10 so as to determine whether the operation state of the battery is normal. For example, the analysis module 11 determines whether the battery is charged/discharged too frequently or whether the battery needs to be charged. Further, the analysis module 11 obtains the discharge parameter through calculation of the parameter of the battery. The discharge parameter represents the current discharge state of the battery and used to obtain the current discharge curve. Therein, the discharge parameter is an average value of the current value of the parameter of the battery and another value of the parameter of the battery obtained before a certain time. For example, the reading module 10 reads the value of the parameter of the battery every ten seconds. The current discharge parameter is obtained by averaging the latest value of the parameter of the battery and the value of the parameter of the battery obtained ten seconds ago.

In particular, a threshold value is set in the analysis module 11. If the calculated discharge parameter is greater than the threshold value, the analysis module 11 records a discharge curve, i.e., a curve showing a relationship between the time and temperature, voltage, current and capacity of the battery, which indicates the current operation state of the battery. On the other hand, if the discharge parameter is less than the threshold value, the reading module 10 continuously reads the parameter of the battery until the analysis module 11 determines that the change of the parameter of the battery reaches a certain level. Then, the analysis module 11 records the discharge curve at that time.

The charging module 12 has a mapping table that maps a plurality of discharge curve models to a plurality of charge modes. The charging module 12 obtains a discharge curve model according to the discharge curve recorded by the analysis module 11 and provides a charge mode corresponding to the discharge curve model according to the mapping table, thereby charging the battery based on the charge mode. In other words, the charging module 12 determines the charge mode according to the discharge curve obtained by the analysis module 11. As such, the analysis module 11 provides different charge modes according to different operation states of the battery. That is, the analysis module 11 provides different charging current and time based on different discharging current and voltage of the battery.

Besides the number of charging/discharging times, the temperature of the battery also affects the lifespan of the battery. Therefore, it is important to effectively control the temperature of the battery. The greater the charging current is, the shorter the charging time becomes. However, a great charging current leads to a high temperature of the battery. Therefore, it is necessary to make a tradeoff between the charging time and the temperature so as to reduce damages to the battery. Therefore, the charging module 12 provides different charge modes corresponding to different operation states of the battery. Several charge modes corresponding to different operation states of the battery are exemplified as follows.

### <Charge mode 1>

When the discharging current of the battery is less than 300mA and the voltage of the battery decreases to 3.5V, the battery is charged through a charge mode having a charging current of 1.5A such that the battery is charged to 4.0V in a short time (about 2 hours). Although the charging current is high, the charging time is short, thereby shortening the time the battery stays under a high temperature and accordingly reducing damages to the battery.

### <Charge mode 2>

When the discharging current is between 300mA and 750mA and the voltage decreases to 3.4V, the battery is charged through a charge mode having a charging current of 1.0A such that the battery is charged to 4.1V in three hours. As such, although the charging time is long, the charging current is low. Therefore, the battery can have a relatively low average temperature during the charging process so as to avoid damages caused by high temperature.

### <Charge mode 3>

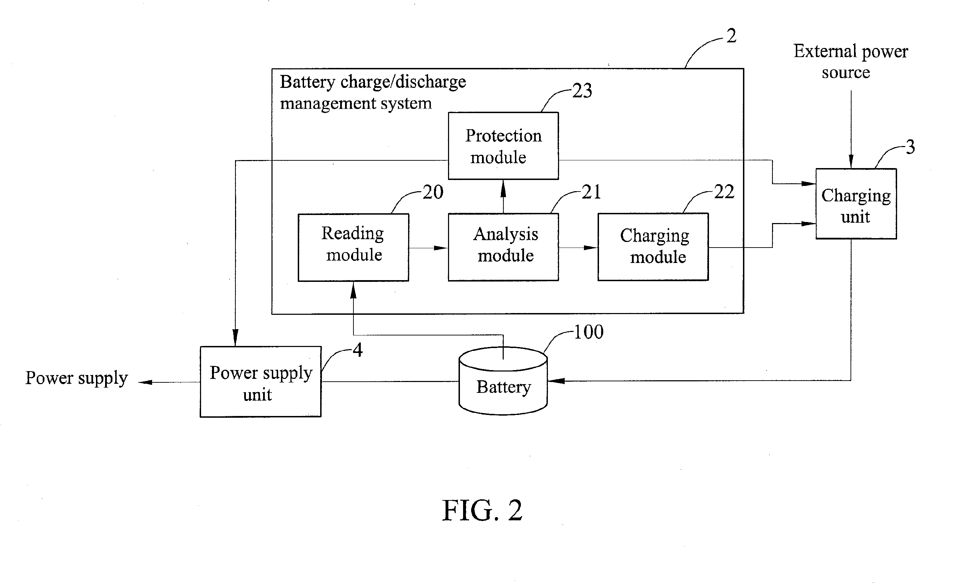

When the discharging current is greater than 1A and the voltage of the battery decreases to 3.3V, the battery is charged through a charge mode having a charging current of 500mA such that the battery is charged to 4.2V in four to six hours. As such, although the charging time is longer, the charging current is lower. Therefore, the battery can have a relatively low temperature during the charging process so as to avoid damages caused by high temperature. Therefore, when to charge the battery is determined according to the discharging current and voltage of the battery, and the charge mode takes into account the temperature effect of the charging current. Further, the number of charging times in different charge modes is close to each other. For example, in the charge mode 3, since the discharging current is relatively high, the battery is charged only when the voltage of the battery decreases to 3.3V Further, the battery is charged to a higher voltage of 4.2V As such, the number of charging times is reduced. On the other hand, since the discharging current is relatively low in the charge mode 1, the battery is charged when the voltage of the battery decreases to 3.5V, and the battery is only charged to 4.0V, thereby shortening the charging time so as to reduce damages to the battery caused by the relatively high charging current of 1.5A. Therefore, the present invention provides different charge modes according to different operation states of the battery so as to reduce damages to the battery and prolong the life and lifespan of the battery. FIG 2 shows a battery charge/discharge management system according to another embodiment of the present invention. The battery charge/discharge management system 2 provides different charge modes according to different operation states of the battery 100. Therein, the reading module 20, the analysis module 21 and the charging module 22 have the same functions as those in FIG 1, and detailed description thereof is omitted herein. The system 2 further has a protection module 23.

The protection module 23 is used to monitor the parameter of the battery 100 so as to stop charging/discharging the battery when the parameter of the battery is greater than a predetermined value. As previously described, current, voltage and temperature have an impact on the battery 100. Therefore, the system 2 monitors the parameter of the battery 100 through the protection module 23. After the parameter of the battery 100 is read by the reading module 20, it is analyzed by the analysis module 21. If it is determined that the battery needs to be charged, the charging module 22 provides a suitable charge mode. On the other hand, if it is determined by the analysis module 21 that the parameter of the battery 100 is abnormal, for example, the parameter of the battery 100 is greater than a predetermined value, a warning signal is generated and even charging/discharging of the battery 100 is stopped.

For example, if the temperature is higher than 55°C or the voltage is higher than 4.2V or the current is greater than 1.3A, the protection module 23 continuously generates warning signals so as to inform the user of the abnormal state of the battery 100. If the temperature is higher than 60°C or the voltage is higher than 4.5V or the current is greater than 1.5A, the protection module 23 informs the charging unit 3 or the power supply unit 4 connected to the battery 100 to stop charging/discharging the battery 100, thereby avoiding damages to the battery.

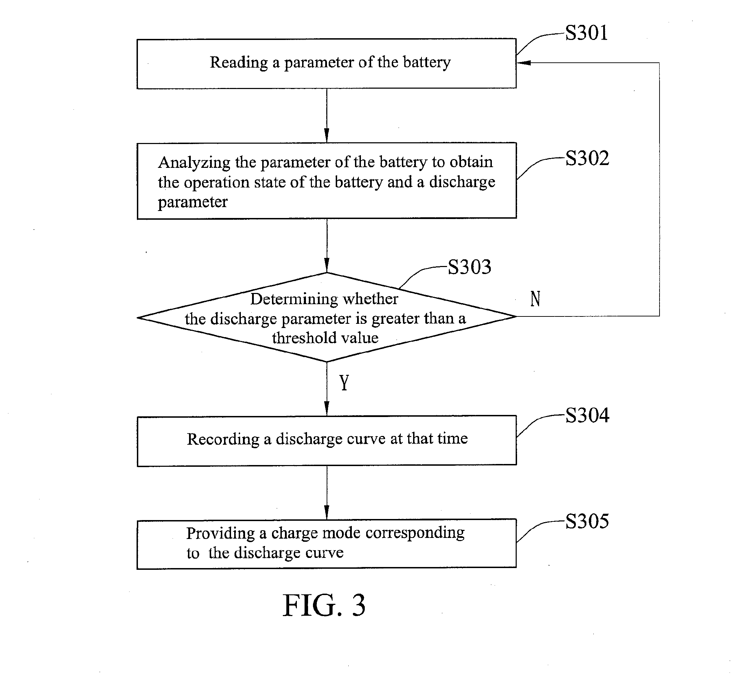

FIG 3 shows a flow chart of a battery charge/discharge management method according to the present invention. In step S301, a parameter of the battery is read. Particularly, when a battery charge/discharge management mechanism is started, the parameter of the battery is continuously read. The parameter of the battery indicates the current operation state of the battery. The parameter of the battery comprises at least one of the voltage, current, temperature and capacity of the battery. Then, the method goes to step S302.

In step S302, the parameter of the battery is analyzed to obtain the operation state of the battery and a discharge parameter. That is, in step S302, the parameter of the battery obtained through step S301 is analyzed so as to know the operation state of the battery, for example, whether the battery is abnormal or whether the battery is charged/discharged too frequently. Further, the discharge parameter is obtained through the parameter of the battery.

The discharge parameter can be an average value of two values of the parameter of the battery, i.e., an average value of the latest value of the parameter of the battery and another value of the parameter of the battery obtained before a certain time. The certain time refers to the time interval the parameter of the battery is read in step S301. Therefore, the current discharge parameter is an average value of the latest value of the parameter of the battery and the previous value of the parameter of the battery. Then, the method goes to step S303.

In step S303, whether the discharge parameter is greater than a threshold value is determined. The threshold value is predetermined according to the characteristics of the battery. If the discharge parameter is less than the threshold value, the method goes to step S301 for continuously reading the parameter of the battery; otherwise, the method goes to step S304.

In step S304, a discharge curve at that time is recorded. Then, the method goes to step S305.

In particular, in step S303, whether the discharge parameter is greater than the threshold value is determined. If it is determined that the discharge parameter is less than the threshold value, the battery does not need to be charged and the process goes back to step S301. Otherwise, if the discharge parameter is greater than the threshold value, it means that the battery needs to be charged. As such, the method goes to step S304 and the discharge curve at that time is recorded.

In step S305, a discharge curve model is obtained according to the discharge curve such that a charge mode corresponding to the discharge curve model is provided according to a mapping

table. In particular, the discharge curve indicates the operation state of the battery. A discharge curve model corresponding to the discharge curve is determined. Through the mapping table that maps a plurality of discharge curve models to a plurality of charge modes, a charge mode corresponding to the discharge curve model can be provided. Therefore, according to different operation states of the battery, different charge modes can be provided. For example, different charging current and time are provided according to different discharging current and voltage, thereby shortening the time the battery stays under a high temperature and prolonging the lifespan of the battery.

In another embodiment, whether the discharge parameter is greater than the threshold value can also be determined in step S304, and if the discharge parameter is less than the threshold value, the discharge curve is kept unchanged. In particular, in an original charge mode, if the discharge parameter is less than the threshold value, it means that the operation state of the battery does not change too much. Therefore, the discharge curve does not need to be updated, and the original discharge curve can be used for providing a corresponding charge mode. Further, in step S302, the parameter of the battery is monitored such that when the parameter of the battery is abnormal, charging/discharging of the battery can be stopped, thereby protecting the battery against possible damages. As previously described, the temperature, voltage and current of the battery can have an impact on the function of the battery. If the battery is abnormal, for example, the parameter of the battery is greater than a predetermined value, a warning signal can be generated or charging/discharging of the battery can be stopped, thereby protecting the battery from being damaged by high temperature, high voltage or large current.

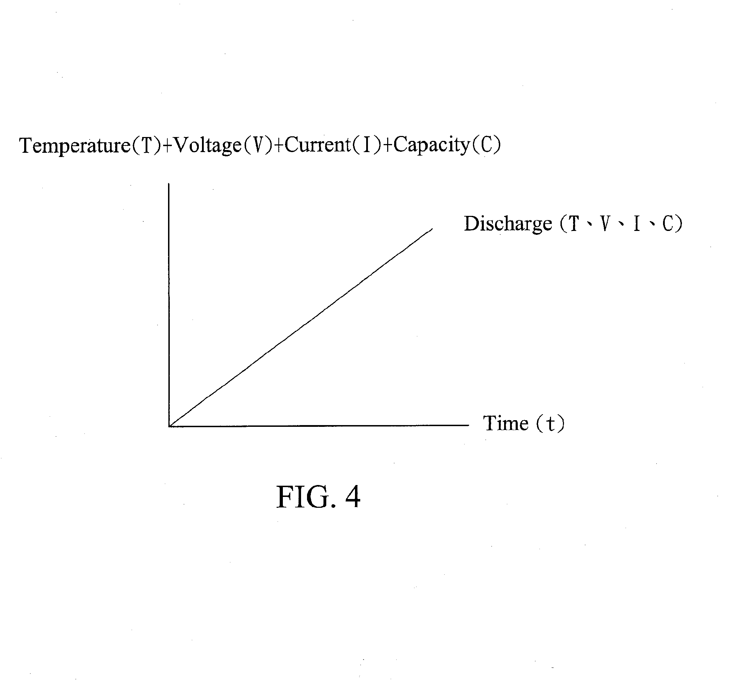

FIG 4 shows an example of a discharge curve as described in the battery charge/discharge management system according to the present invention. Referring to FIG 4, the parameter of the battery such as the temperature (T), voltage (V), current (I) and capacity (C) of the battery is positively proportional to the time (t). That is, the longer the time is, the greater the discharge parameter (including the temperature, voltage, current and capacity) of the discharge curve becomes. Therefore, the battery charge/discharge management system can determine the charge mode according to the discharge curve.

Therefore, the battery charge/discharge management system and method according to the present invention provide a charging mechanism according to the operation state of a battery such that different charging current and time can be provided based on different discharging current and voltage of the battery. As such, the time the battery stays under a high temperature is shortened and the battery is prevented from being charged/discharged too frequently, thereby prolonging the life and lifespan of the battery. In addition, the present invention provides a battery protection mechanism for sending a warning signal or stopping charging/discharging the battery when the battery is abnormal.

The above-described descriptions of the detailed embodiments are only to illustrate the preferred implementation according to the present invention, and it is not to limit the scope of the present invention. Accordingly, all modifications and variations completed by those with ordinary skill in the art should fall within the scope of present invention defined by the appended claims.

## Claims

1. A battery charge/discharge management system for charging a battery based on an operation state of the battery, comprising:
a reading module for reading a parameter of the battery;
an analysis module for analyzing the parameter of the battery and determining the operation state of the battery based on the parameter of the battery so as to obtain a discharge parameter and record a discharge curve; and
a charging module having a mapping table with mapping a plurality of discharge curve models to a plurality of charge modes, the charging module obtaining the discharge curve model based on the discharge curve recorded by the analysis module and charging the battery based on the charge mode corresponding to the discharge curve model.

2. The system of claim 1, wherein the charge modes provide different charging current and time based on different discharging current and voltage of the battery.

3. The system of claim 1, wherein the parameter of the battery comprises at least one selected from the group consisting of a voltage, current, temperature and capacity of the battery.

4. The system of claim 1, wherein the discharge parameter is an average value of the current value of the parameter of the battery and another value of the parameter of the battery obtained before a certain time.

5. The system of claim 1, wherein a threshold value is set in the analysis module so as for the analysis module to record the discharge curve at the time when the discharge parameter is greater than the threshold value.

6. The system of claim 1, further comprising a protection module that monitors the parameter of the battery so as to stop charging/discharging the battery when the parameter of the battery is greater than a predetermined value.

7. A battery charge/discharge management method for charging a battery based on an operation state of the battery, comprising the steps of:
(1) reading a parameter of the battery;
(2) analyzing the parameter of the battery to obtain the operation state of the battery and a discharge parameter;
(3) determining the discharge parameter and recording a discharge curve based on the discharge parameter; and
(4) providing a mapping table with mapping a plurality of discharge curve models to a plurality of charge modes, and obtaining the discharge curve model based on the discharge curve so as to provide the charge mode corresponding to the discharge curve model .

8. The method of claim 7, wherein the parameter of the battery comprises at least one selected from the group consisting of the voltage, current, temperature and capacity of the battery.

9. The method of claim 7, wherein step (3) further comprises providing a threshold value, and recording the discharge curve when the discharge parameter is determined to be greater than the threshold value.

10. The method of claim 7, wherein step (3) further comprises providing a threshold value, and going back to step (1) to continuously read the parameter of the battery when the discharge parameter is determined to be less than the threshold value.

11. The method of claim 7, wherein step (3) further comprises providing a threshold value, and keeping the discharge curve unchanged when the discharge parameter is determined to be less than the threshold value, and step (4) comprises providing the charge mode corresponding to the discharge curve.

12. The method of claim 7, wherein the discharge parameter of step (2) is an average value of the current value of the parameter of the battery and another value of the parameter of the battery obtained before a certain time.

13. The method of claim 7, wherein in step (4) the charge modes provide different charging current and time based on different discharging current and voltage of the battery.

14. The method of claim 7, wherein step (2) further comprises monitoring the parameter of the battery so as to stop charging/discharging the battery when the parameter of the battery is abnormal.
